# EUROPEAN PATENT APPLICATION

(11) **EP 3 641 015 A1**
(43) Date of publication of application: **22.04.2020**
(21) Application number: 18818867.6
(22) Date of filing: 12.06.2018
(51) Int. Cl.: H01M 2/20, H01M 2/10, H01M 2/30

(54) **POWER STORAGE DEVICE**

(30) Priority: 16.06.2017 JP 2017118275
(71) Applicant: GS Yuasa International Ltd., Kyoto-shi, Kyoto 601-8520 (JP)
(72) Inventor: TSURUTA, Shogo, Kyoto-shi Kyoto 601-8520 (JP); KAWAI, Yuta, Kyoto-shi Kyoto 601-8520 (JP); WADA, Akira, Kyoto-shi Kyoto 601-8520 (JP)
(74) Representative: Grünecker Patent- und Rechtsanwälte PartG mbB
(86) International application number: PCT/JP2018/022301
(87) International publication number: WO 2018/230524

(57) **Abstract**

The present invention provides an energy storage apparatus that can achieve downsizing by preventing interference between a bent portion of a connection member and an electrode terminal. An energy storage apparatus 1 includes an energy storage device 20 and a connection member 30 electrically connected to an electrode terminal 221 of the energy storage device 20. The connection member 30 includes the opposing portion 31 opposed to the electrode terminal 221 and the bent portion 32 bent from the opposing portion 31 toward the energy storage device 20. The electrode terminal 221 includes the outer peripheral surface 224 and the surface portion 225 opposed to the opposing portion 31 of the connection member 30. A first corner 226a formed by an outer peripheral surface 224 and a surface portion 225 facing a bent portion 32 is entirely located inside an intersection point where a virtual extension surface L2 of the surface portion 225 and a virtual extension surface L2 of the outer peripheral surface 224 intersect with each other.

## Description

### TECHNICAL FIELD

The present invention relates to an energy storage apparatus including an energy storage device and a connection member electrically connected to an electrode terminal of the energy storage device.

### BACKGROUND ART

Conventionally, an energy storage apparatus including an energy storage device and a connection member electrically connected to an electrode terminal of the energy storage device is known. Sometimes, the connection member expands thermally by energization. In recent years, in order to relieve stress during the thermal expansion, there is an energy storage apparatus on which the connection member including a bent stress relaxation portion (bent portion) is mounted (see, for example, see Patent Document 1).

### PRIOR ART DOCUMENT

### PATENT DOCUMENT

Patent Document 1: JP-A-2007-73266

### DISCLOSURE OF THE INVENTION

### PROBLEMS TO BE SOLVED BY THE INVENTION

In order to achieve downsizing of an energy storage apparatus, there is a demand for arranging components of the energy storage apparatus closely to one another or making the components compact. The same holds true for an energy storage device and a connection target that are connected to each other through a connection member. In the case where a bent portion of the connection member is disposed between the energy storage device and the connection target, the bent portion interferes with an electrode terminal of the energy storage device if the bent portion and the energy storage device are brought close to each other. When the bent portion and the electrode terminal are disposed so as to avoid such interference, the energy storage device and the connection target are hindered from being arranged closely to one another.

An object of the present invention is to provide an energy storage apparatus that can achieve downsizing by preventing the interference between a bent portion of a connection member and an electrode terminal.

### MEANS FOR SOLVING THE PROBLEMS

According to one aspect of the present invention, an energy storage apparatus includes: an energy storage device; and a connection member electrically connected to an electrode terminal of the energy storage device. The connection member includes an opposing portion opposed to the electrode terminal and a bent portion bent from the opposing portion toward the energy storage device, the electrode terminal includes an outer peripheral surface and a surface portion opposed to the opposing portion of the connection member, and a first corner facing the bent portion and formed by the outer peripheral surface and the surface portion is entirely located inside an intersection point where a virtual extension surface of the surface portion and a virtual extension surface of the outer peripheral surface intersect with each other.

Since the bent portion of the connection member is bent from the opposing portion toward the energy storage device, the bent portion does not protrude from the opposing portion on the opposite side to the energy storage device. Consequently, an amount of the connection member protruding outward from the energy storage device can be reduced, so that a height of the energy storage device can be suppressed as a whole.

Since the entire first corner of the electrode terminal is located inside the intersection point where the virtual extension surface of the surface portion and the virtual extension surface of the outer peripheral surface intersect with each other, the first corner can be prevented from interfering with the bent portion of the connection member. Consequently, the electrode terminal of the energy storage device can be brought closer to the bent portion of the connection member, and the energy storage device and the connection member can be disposed more compactly. Thus, the energy storage apparatus can be downsized.

The energy storage apparatus may further include a plurality of the energy storage devices arranged side by side in a first direction. The connection member includes a plurality of the opposing portions opposed to the electrode terminals of at least two energy storage devices, the bent portion is located between the plurality of opposing portions, and the first corner is along a second direction orthogonal to the first direction among the electrode terminals.

Since the first corner is formed along the second direction, the first corner does not protrude in the first direction. Consequently, the energy storage device can be disposed close to the bent portion in the first direction. That is, the two energy storage devices, which are connected to the connection member, side by side in the first direction can be disposed more compactly.

The energy storage apparatus may further includes an insulating member disposed between the bent portion and the energy storage device. The bent portion is opposed to a terminal arrangement surface on which the electrode terminal is disposed in the energy storage device, and the insulating member is disposed between the bent portion and the terminal arrangement surface.

Since the insulating member is disposed between the bent portion and the energy storage device, the insulating member can insulate the bent portion and the energy storage device from each other even if the bent portion is brought closer to the energy storage device. Since the bent portion of the connection member and the insulating member are disposed so as to overlap on the terminal arrangement surface of the energy storage device, the interval between the two energy storage devices connected to each other by the connection member can be narrowed. Thus, the two energy storage devices, the insulating member, and the connection member can be disposed more compactly.

The first corner may have a curved shape with a curvature radius smaller than that of the bent portion.

In the case where the first corner has a curved shape with a curvature radius larger than that of the bent portion, even if the first corner is disposed closer to the bent portion, the first corner interferes with the bent portion because the bent portion is curved steeper than the first corner. On the other hand, in the case where the first corner has a curved shape with a curvature radius smaller than that of the bent portion, the first corner can be disposed closer to the bent portion because the first corner is curved steeper than the bent portion.

The first corner has the curved shape with the curvature radius smaller than that of the bent portion, so that an area of the surface portion can be enlarged. Thus, when the opposing portion of the connection member is brought into contact with the surface portion, a contact area can be enlarged. Further, conductivity between the connection member and the electrode terminal can be increased.

The electrode terminal may include a second corner formed by the outer peripheral surface and the surface portion at a position that is not opposed to the bent portion, the first corner and the second corner may have curved shapes, and the first corner may have a curvature radius larger than that of the second corner.

In some cases, the deburring is performed for the electrode terminal during the manufacturing, and the corner is curved. Since the corner is formed by deburring, the curvature radius is small. For this reason, in a portion corresponding to the first corner, further processing is performed to increase the curvature radius. In portions that are not processed, the portion that is not opposed to the bent portion serves as the second corner. That is, the first corner has the curvature radius larger than that of the second corner formed by the deburring, so that the first corner can be disposed closer to the bent portion.

### ADVANTAGES OF THE INVENTION

According to the energy storage apparatus of the present invention, the downsizing can be achieved by preventing the interference between the bent portion of the connection member and the electrode terminal.

### BRIEF DESCRIPTION OF THE DRAWINGS

Fig. 1 is a perspective view illustrating an appearance of an energy storage apparatus according to an embodiment.
Fig. 2 is an exploded perspective view illustrating each component when the energy storage apparatus of the embodiment is disassembled.
Fig. 3 is a perspective view illustrating a holding member of the embodiment when viewed from a positive side in a Z-axis direction.
Fig. 4 is a perspective view illustrating the holding member of the embodiment when viewed from a negative side in the Z-axis direction.
Fig. 5 is a perspective view illustrating a state in which the holding member of the embodiment holds a connection member when viewed from the positive side in the Z-axis direction.
Fig. 6 is a sectional view illustrating a surrounding structure of a connection member opening of the embodiment.
Fig. 7 is a sectional view illustrating the surrounding structure of the connection member opening of the embodiment.
Fig. 8 is an enlarged sectional view illustrating a positional relationship between a first corner on a bent portion side and a bent portion of the embodiment.
Fig. 9 is a schematic diagram illustrating a relationship between a curvature radius of the first corner and a curvature radius of one end of the bent portion of the embodiment.

### MODE FOR CARRYING OUT THE INVENTION

Hereinafter, an energy storage apparatus according to an embodiment and a modification of the present invention will be described with reference to the drawings. The following embodiment and modification described below illustrate a comprehensive or specific example. Numerical values, shapes, materials, components, dispositions of the components, connection forms of the components, and the like described in the following embodiment and modification are merely examples, and are not intended to limit the present invention. Among the components of the following embodiment and modification, the components that are not described in the independent claim indicating the highest concept are described as optional components. In each of the drawings, dimensions and the like are not strictly illustrated.

In the following description and drawings, an arrangement direction of electrode terminals in one energy storage device or a direction opposed to a short side surface of a case of the energy storage device is defined as an X-axis direction. An arrangement direction of energy storage devices, a direction opposed to a long side surface of the case of the energy storage device, or a thickness direction of the case is defined as a Y-axis direction. An arrangement direction of an outer case body and a lid of the energy storage apparatus, an arrangement direction of the energy storage device, a bus bar (connection member), and a substrate, an arrangement direction of a case body and the lid of the energy storage device, or a vertical direction is defined as a Z-axis direction. The X-axis direction, the Y-axis direction, and the Z-axis direction intersect with one another (hereinafter, orthogonal to one another in the embodiment). Although it may be conceivable that the Z-axis direction is not in the vertical direction depending on a mode of use, hereinafter the Z-axis direction is described as the vertical direction for convenience of explanation. In the following description, a positive side in the X-axis direction indicates an arrow direction side of the X axis, and a negative side in the X-axis direction indicates an opposite side to the positive side in the X-axis direction. The same applies to the Y-axis direction and the Z-axis direction.

### (Embodiment)

### [1. General description of energy storage apparatus 1]

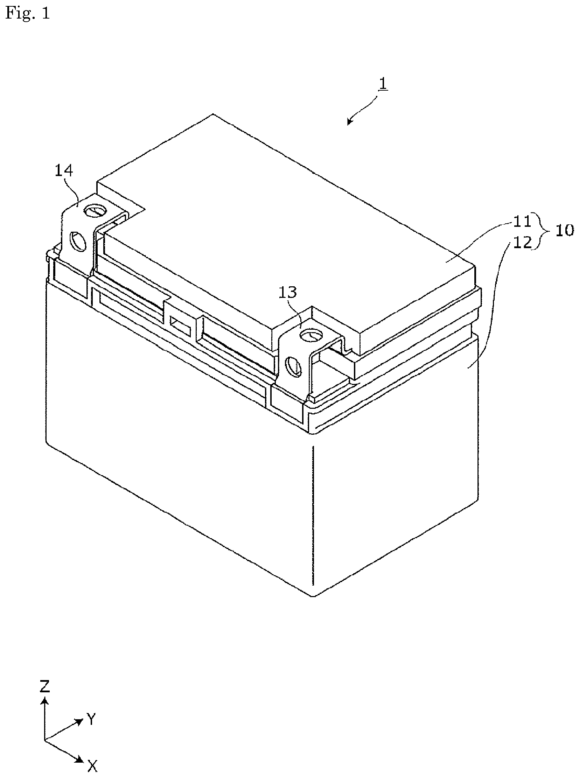

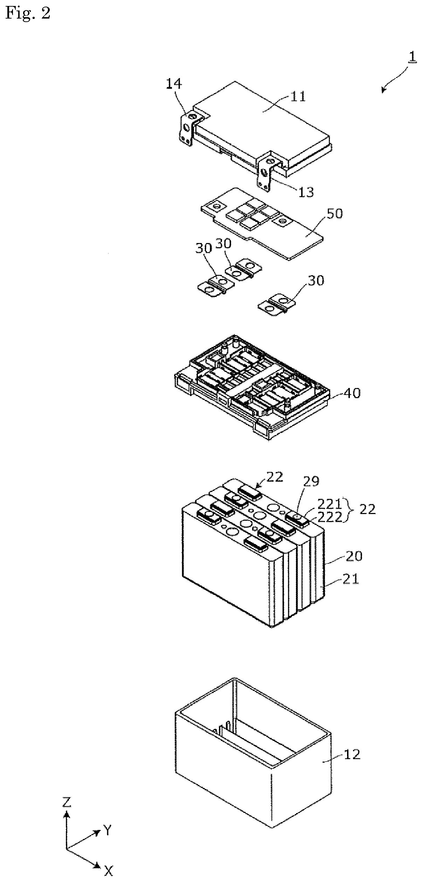

A general description of an energy storage apparatus 1 according to an embodiment will be given with reference to Figs. 1 and 2. Fig. 1 is a perspective view illustrating an appearance of the energy storage apparatus 1 of the embodiment. Fig. 2 is an exploded perspective view illustrating each component when the energy storage apparatus 1 of the embodiment is disassembled.

The energy storage apparatus 1 is an apparatus that can charge electricity from an outside and discharge the electricity to the outside. The energy storage apparatus 1 is a battery module used for a power storage application, a power supply application, and the like. Specifically, for example, the energy storage apparatus 1 is used as a battery for driving or starting an engine of a moving body such as automobiles such as an electric vehicle (EV), a hybrid electric vehicle (HEV), and a plug-in hybrid electric vehicle (PHEV), motorcycles, watercrafts, snowmobiles, agricultural machines, and construction machines.

As illustrated in Figs. 1 and 2, the energy storage apparatus 1 includes an outer case 10 including a lid 11 and an outer case body 12, a plurality of energy storage devices 20 accommodated in the outer case 10, a connection member 30, a holding member 40, and a substrate 50.

The outer case 10 is a rectangular (box-shaped) case (module case) constituting an outer case of the energy storage apparatus 1. That is, the outer case 10 is disposed outside the plurality of energy storage devices 20, the connection member 30, the holding member 40, the substrate 50, and the like, holds the energy storage devices 20 and the like at predetermined positions, and protects the energy storage devices 20 and the like from an impact and the like.

The outer case 10 includes the lid 11 constituting a lid of the outer case 10 and the outer case body 12 constituting a main body of the outer case 10. The lid 11 is a flat, rectangular member closing the opening of the outer case body 12, and includes an external terminal 13 on a positive electrode side and an external terminal 14 on a negative electrode side. The external terminals 13 and 14 are electrically connected to the energy storage device 20, and the energy storage apparatus 1 charges the electricity from the outside through the external terminals 13 and 14, and discharges the electricity to the outside through the external terminals 13 and 14. The outer case body 12 is a bottomed rectangular cylindrical housing (casing) in which an opening is formed, and accommodates the energy storage device 20 and the like.

For example, the external terminals 13 and 14 are made of a metal conductive member such as aluminum or an aluminum alloy. Other parts of the outer case 10 are made of an insulating material such as polycarbonate (PC), polypropylene (PP), polyethylene (PE), a polyphenylene sulfide resin (PPS), polybutylene terephthalate (PBT), or an ABS resin. This enables the outer case 10 to prevent the energy storage device 20 and the like from contacting with a metal member of the outside and the like.

The energy storage device 20 is a secondary battery (battery cell) that can charge and discharge the electricity, more specifically a nonaqueous electrolyte secondary battery such as a lithium ion secondary battery. The energy storage device 20 has a flat, rectangular parallelepiped (square type) shape. In the embodiment, four energy storage devices 20 are arrayed in the Y-axis direction. A shape of the energy storage device 20 and the number of energy storage devices 20 to be arrayed are not limited. The energy storage device 20 is not limited to the nonaqueous electrolyte secondary battery, but may be a secondary battery except for the nonaqueous electrolyte secondary battery, a capacitor, or a primary battery that can use stored electricity even if a user does not charge the battery.

Specifically, the energy storage device 20 includes a metal case 21, and a pair of terminals 22 (a positive electrode terminal and a negative electrode terminal 23) is provided in a lid portion of the case 21. The pair of terminals 22 is disposed so as to protrude from the lid portion of the case 21 toward the connection member 30 (upward, namely, toward the positive side of the Z-axis direction). The terminal 22 includes an electrode terminal 221 (a positive-electrode terminal and a negative-electrode terminal) to which the connection member 30 is connected and an insulating portion 222 insulating the electrode terminal 221 and the case 21 from each other. The electrode terminal 221 of the terminal 22 is connected to the external terminals 13, 14 through the connection member 30, which allows the energy storage apparatus 1 to charge and discharge the electricity from and to the outside. In the embodiment, each energy storage device 20 is disposed such that the positive electrode terminal and the negative electrode terminal of adjacent energy storage devices 20 are inverted.

A liquid injection portion that performs electrolyte solution filling, a gas release valve that discharges gas to release pressure during a pressure rise in the case 21, and the like may be provided in the lid portion of the case 21. An electrode assembly (also referred to as an energy storage element or a power generating element), a current collector (a positive electrode current collector and a negative electrode current collector), and the like are disposed in the case 21, and the electrolyte solution (nonaqueous electrolyte) or the like is enclosed in the case 21. However, detailed description is omitted.

The main body portion of the case 21 is formed in a flat box shape with an upper end opened. A side surface having the largest area in the main body portion of the case 21 is a long side surface, and a side surface having an area smaller than the long side surface is a short side surface. The long side surface of the main body portion of the case 21 faces the Y-axis direction, and the short side surface faces the X-axis direction.

The connection member 30 is a rectangular plate-shaped member that electrically connects the electrode terminals 221 of the plurality of energy storage devices 20 while being disposed on the holding member 40. The connection member 30 is made of a metal conductive member such as copper, a copper alloy, aluminum, and an aluminum alloy.

In the embodiment, three connection members 30 are provided. The three connection members 30 are connection members connected to the electrode terminals 221 (the positive electrode terminals and the negative electrode terminals) of the four energy storage devices 20. Among the electrode terminals 221 of the four energy storage devices 20, the electrode terminal 221 to which the connection member 30 is not connected is connected to the external terminals 13, 14 through a bus bar (not illustrated). Thus, the external terminals 13, 14 and the four energy storage devices 20 are connected in series by the three connection members and the bus bar.

The holding member 40 is an electrical component tray that holds the substrate 50, the energy storage device 20, the connection member 30, and other wirings (not illustrated) while being disposed above the plurality of energy storage devices 20. The holding member 40 can insulate the substrate 50, the energy storage device 20, the connection member 30, and the like from other members, and regulate positions of the substrate 50, the connection member 30, and the like. The holding member 40 is made of an insulating material such as PC, PP, PE, PPS, PBT, or ABS resins. Details of the holding member 40 will be described later.

The substrate 50 is a control substrate that is placed on and fixed to the holding member 40. Specifically, the substrate 50 includes a control circuit (not illustrated), acquires various pieces of information such as charge states and discharge states, voltage values, current values, and temperatures of the plurality of energy storage devices 20, controls on and off of a relay, and communicates with other devices.

### [2. Positional relationship among holding member, terminal, and connection member]

Specific configurations of the respective members will be described below based on a positional relationship among the holding member 40, the terminal 22, and the connection member 30. A specific configuration of the holding member 40 will be described.

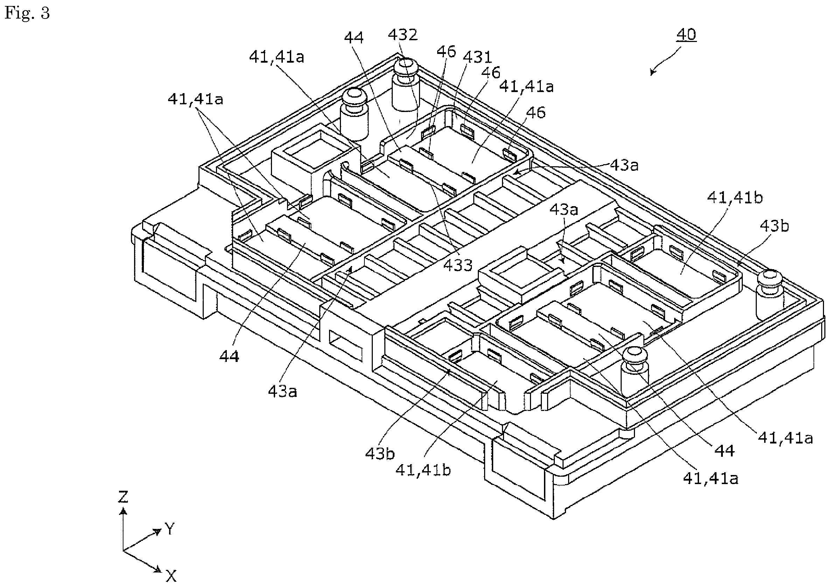

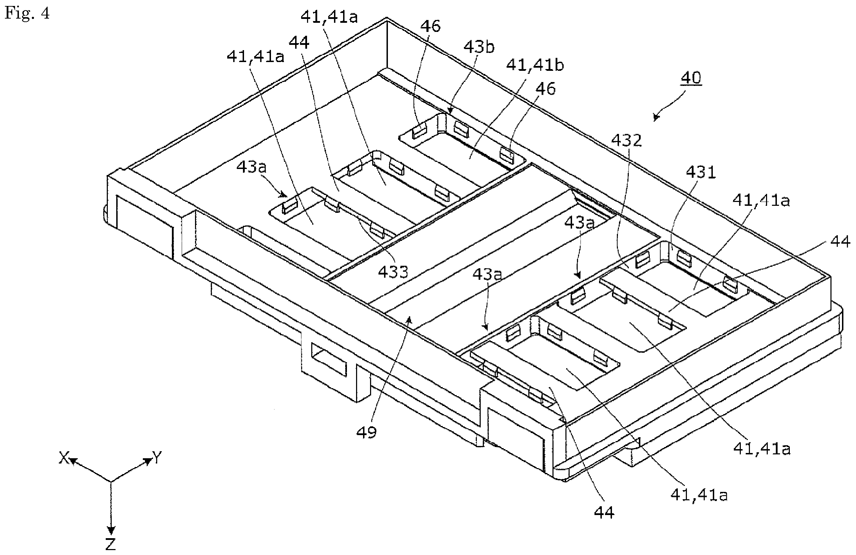

Fig. 3 is a perspective view illustrating the holding member 40 of the embodiment when viewed from the positive side in the Z-axis direction. Fig. 4 is a perspective view illustrating the holding member 40 of the embodiment when viewed from the negative side in the Z-axis direction.

As illustrated in Figs. 3 and 4, in the holding member 40, an opening 41 that exposes the terminal 22 is formed at a position corresponding to the terminal 22 of each energy storage device 20. Specifically, in the holding member 40, a total of eight openings 41 having a substantially rectangular shape in planar view are arrayed in two rows and four columns. At this point, a row direction is the X-axis direction, and a column direction is the Y-axis direction. The pair of terminals 22 of one energy storage device 20 is disposed in the two openings 41 arranged in the same row. As illustrated in Fig. 4, a gas flow channel 49 through which an exhaust gas discharged from a gas release valve of the energy storage device 20 passes to the outside of the energy storage apparatus 1 is formed between the rows of the openings 41.

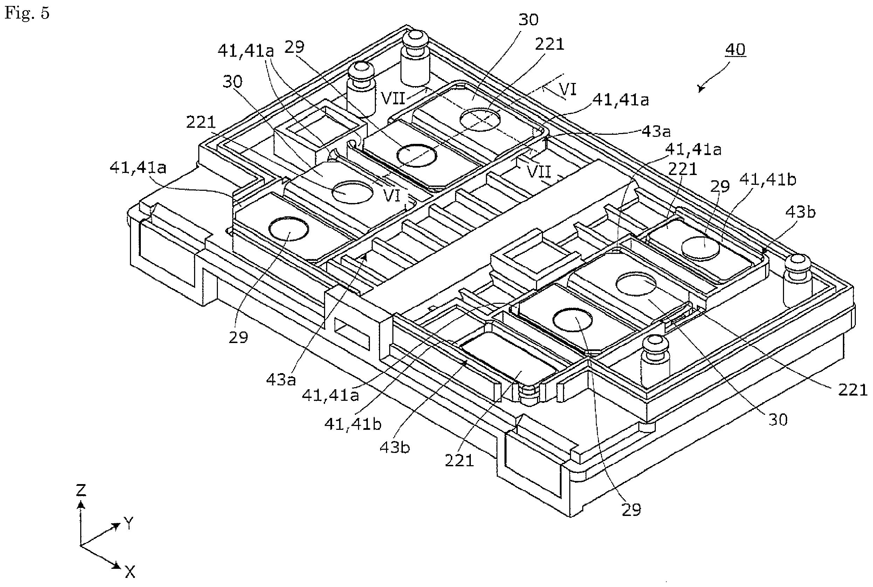

Fig. 5 is a perspective view illustrating a state in which the holding member 40 of the embodiment holds the connection member 30 when viewed from the positive side in the Z-axis direction. As illustrated in Fig. 5, each of the eight openings 41 includes a connection member opening 41a in which the connection member 30 is disposed and a bus bar opening 41b in which the bus bar (not illustrated) is disposed. Two connecting member openings 41a adjacent to each other in the Y-axis direction are paired, and one connecting member 30 is disposed with respect to one pair of connection member openings 41a. In the row on the negative side in the X-axis direction, all four openings 41 are connection member openings 41a. Two pairs of connection member openings 41a are provided in the row on the negative side in the X-axis direction. On the other hand, in the row on the positive side in the X-axis direction, the openings 41 at both ends are bus bar openings 41b, and the remaining openings 41 are connection member openings 41a. The pair of connection member openings 41a is provided in the row on the positive side in the X-axis direction. Each pair of connection member openings 41a is surrounded by a surrounding wall 43a. Each bus bar opening 41b is surrounded by a surrounding wall 43b. In the surrounding wall 43a, a long beam 44 is stretched in the X-axis direction. Two spaces surrounded by the surrounding wall 43a and the beam 44 constitute the pair of connection member openings 41a.

As described above, a plurality of positioning portions 46 that abut on the terminal 22 to position the terminal 22 are provided in the surrounding wall 43a and the beam 44 constituting the connection member opening 41a and the surrounding wall 43b constituting the bus bar opening 41b.

The positioning portion 46 will be described in detail. The positioning portion 46 in the pair of connection member openings 41a will be described, and the description of the positioning portion 46 in the bus bar opening 41b will be omitted.

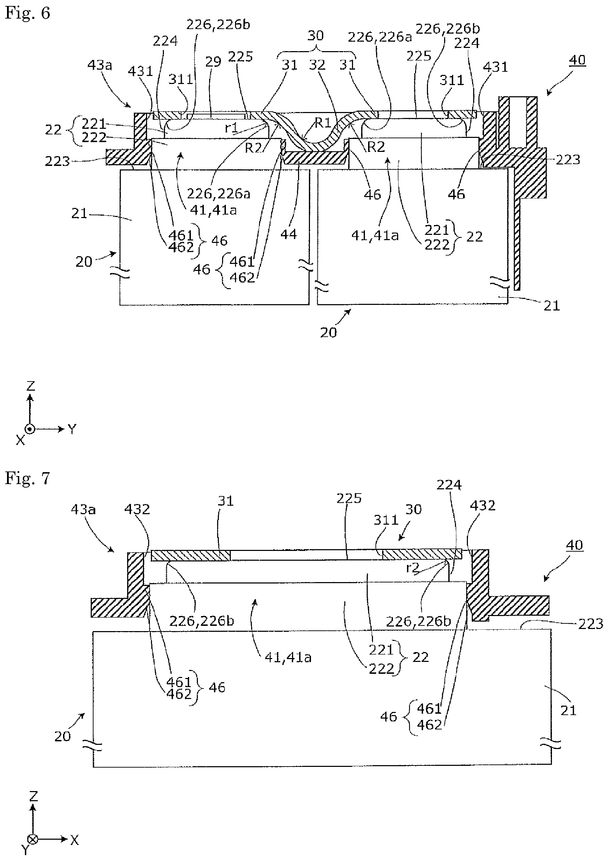

Figs. 6 and 7 are sectional views illustrating a surrounding structure of the connection member opening 41a of the embodiment. Specifically, Fig. 6 is a sectional view illustrating a cut surface parallel to a YZ-plane including a line VI-VI in Fig. 5. Fig. 7 is a sectional view illustrating a cut surface parallel to a ZX-plane including a line VII-VII in Fig. 5. In Figs. 6 and 7, the energy storage device 20 is not illustrated in sectional view, but an outer shape of the energy storage device 20 is illustrated.

As illustrated in Figs. 5 to 7, in the surrounding wall 43a, an inner wall surface extending in the X-axis direction is set to a first wall surface 431, and an inner wall surface extending in the Y-axis direction is set to a second wall surface 432. In the beam 44, an inner wall surface extending in the X-axis direction is set to a third wall surface 433.

In one connection member opening 41a, two positioning portions 46 are arranged on the first wall surface 431 at a predetermined interval in the X-axis direction. The positioning portion 46 of the first wall surface 431 is a protrusion protruding in the Y-axis direction (first direction) so as to go to the inside of the connection member opening 41a. In one connection member opening 41a, one positioning portion 46 is provided on each of the pair of opposing second wall surfaces 432. The positioning portion 46 of the second wall surface 432 is a protrusion protruding in the X-axis direction (second direction) so as to go to the inside of the connection member opening 41a. In one connection member opening 41a, two positioning portions 46 are arranged on the third wall surface 433 at a predetermined interval in the X-axis direction. The positioning portion 46 of the third wall surface 433 is a protrusion protruding in the Y-axis direction so as to go to the inside of the connection member opening 41a in a state of extending upward from the beam 44.

The positioning portion 46 includes an abutment portion 461 abutting on the side surface of the terminal 22 and an inclined portion 462 continuous with the abutment portion 461. The inclined portion 462 is inclined so as to be separated from the side surface of the terminal 22 according to a distance from the abutment portion 461. That is, the inclined portion 462 is inclined so as to go to the inside of the connection member opening 41a as it goes in the direction in which the terminal 22 enters the connection member opening 41a (the positive side in the Z-axis direction). Because the inclined portion 462 is inclined in this way, the terminal 22 can be guided by the inclined portion 462 when the terminal 22 enters the connection member opening 41a.

A specific configuration of the connection member 30 will be described below.

As illustrated in Figs. 6 and 7, the connection member 30 integrally includes a pair of opposing portions 31 opposed to the electrode terminal 221 and a bent portion 32 bend from the pair of opposing portions 31 toward the energy storage device 20. A circular through-hole 311 is made in the opposing portion 31, and the opposing portion 31 and the electrode terminal 221 are welded through the through-hole 311. The bent portion 32 is disposed between the pair of opposing portions 31, and formed in a substantial cosine-wave shape. Thus, the bent portion 32 is disposed between the terminals 22 of the pair of adjacent energy storage devices 20. In the embodiment, a curvature radius R1 in the center of the bent portion 32 and a curvature radius R2 at both ends are equal to each other. Alternatively, the curvature radius R1 and the curvature radius R2y may be different from each other. Because the bent portion 32 is provided in the connection member 30, stress during thermal expansion can be absorbed by the bent portion 32 even if the connection member 30 thermally expands.

A specific configuration of the terminal 22 will be described below.

As illustrated in Figs. 6 and 7, the terminal 22 of the energy storage device 20 is disposed on the surface of the lid portion of the case 21. The surface of the lid portion of the case 21 is a terminal arrangement surface 223 on which the terminal 22 is disposed. The surrounding walls 43a, 43b and the beam 44 of the holding member 40 are disposed above the terminal arrangement surface 223. The bent portion 32 of the connection member 30 is disposed above the beam 44. In this way, the bent portion 32 of the connection member 30 and the beam 44 are disposed so as to overlap the terminal arrangement surface 223 of the energy storage device 20, so that the bent portion 32 of the connection member 30 and the beam 44 are not disposed between the cases 21 of the two energy storage devices 20. Thus, an interval between the two energy storage devices 20 can be narrowed.

In Fig. 6, the bent portion 32 of the connection member 30 protrudes from a surface portion 225 of the electrode terminal 221 toward the terminal arrangement surface 223 to be larger than a thickness in the Z-axis direction of the electrode terminal 221. The bent portion 32 is provided in a range that reaches the insulating portion 222 beyond the electrode terminal 221 from the position of the surface portion 225 in the Z-axis direction. The bent portion 32 abuts on the beam 44 of the holding member 40. The insulating portion 222 is located in the Y-axis direction at a leading end of the bent portion 32 protruding in the Z-axis direction, and the beam 44 is located in the Z-axis direction. The leading end in the Z-axis direction of the bent portion 32 is surrounded by the insulating member (insulating portion 222, beam 44), so that an accident in which a short circuit is generated due to contact of the leading end in the Z-axis direction of the bent portion 32 with another conductive member when the bent portion 32 is deformed.

As described above, the terminal 22 includes the insulating portion 222 and the electrode terminal 221 protruding upward from the insulating portion 222. The electrode terminal 221 is formed in a substantially rectangular shape in planar view (see Fig. 2 and the like). The electrode terminals 221 on the positive electrode side and the negative electrode side are made of metal such as aluminum or an aluminum alloy as a whole. A circular portion 29 protrudes from the upper surface of the electrode terminal 221 on the negative electrode side. The circular portion 29 is made of copper or a copper alloy. The insulating portion 222 is formed in a substantially rectangular shape in planar view using an insulating material such as PC, PP, PE, PPS, PBT, or ABS resin. The abutment portion 461 of the positioning portion 46 abuts on the outside surface of the insulating portion 222.

The electrode terminal 221 includes an outer peripheral surface 224 and the surface portion 225 opposed to the connection member 30. A corner 226 formed by the outer peripheral surface 224 and the surface portion 225 has a curved shape that protrudes outward over an entire circumference of the electrode terminal 221. Here, in the corner 226, a portion opposed to the bent portion 32 is set to a first corner 226a, and a portion that is not opposed to the bent portion 32 is set to a second corner 226b. That is, the first corner 226a is a portion corresponding to the inner side of the pair of sides extending in the X-axis direction, and the second corner 226b is a portion corresponding to the outer side of the pair of sides extending in the X-axis direction and a portion corresponding to a pair of sides extending in the X-axis direction. In the electrode terminal 221, deburring is performed during manufacturing, and the entire corner 226 is curved. In this state, the curvature radius of the corner 226 is small because of deburring. Thereafter, in the portion corresponding to the first corner 226a, further processing is performed to increase the curvature radius. The portion that is not processed serves as the second corner 226b. Consequently, a curvature radius r1 of the first corner 226a is larger than a curvature radius r2 of the second corner 226b.

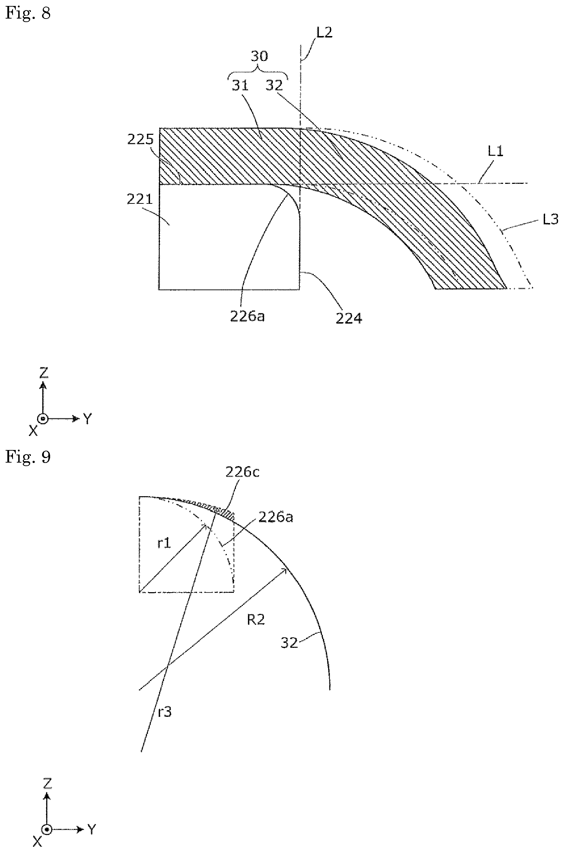

Fig. 8 is an enlarged sectional view illustrating a positional relationship between the first corner 226a on the side of the bent portion 32 and the bent portion 32 of the embodiment. As illustrated in Fig. 8, the entire first corner 226a is located inside an intersection point where a virtual extension surface L1 of the surface portion 225 of the electrode terminal 221 and a virtual extension surface L2 of the outer peripheral surface 224 intersect with each other. When the first corner 226a has a 90-degree angle, the intersection point where the virtual extension surface L1 and the virtual extension surface L2 intersect with each other is also filled with the first corner 226a. For this reason, the bent portion 32 can be disposed only at the position indicated by a virtual line L3 in Fig. 8. Alternatively, as in the embodiment, when the entire first corner 226a is located inside the intersection point where the virtual extension surface L1 and the virtual extension surface L2 intersect with each other, the bent portion 32 of the connection member 30 is disposed in the space. That is, the electrode terminal 221 of the energy storage device 20 can be brought closer to the bent portion 32 of the connection member 30.

Fig. 9 is a schematic diagram illustrating a relationship between the curvature radius of the first corner 226a and the curvature radius of one end of the bent portion 32 of the embodiment. In Fig. 9, a solid line indicates the bent portion 32, a broken line indicates a first corner 226c as a comparative example, and an alternate long and two short dashes line indicates the first corner 226a of the embodiment. The first corner 226c of the comparative example is equal to the first corner 226a in a width in the Y-axis direction. As illustrated in Fig. 9, a curvature radius r3 of the first corner 226c is larger than the curvature radius R2 of the bent portion 32. For this reason, even if the first corner 226c is disposed closer to the bent portion 32, the first corner 226c interferes with the bent portion 32 because the bent portion 32 is curved steeper than the first corner 226c. On the other hand, the curvature radius r1 of the first corner 226a is smaller than the curvature radius R2 of the bent portion 32. That is, the first corner 226a is curved steeper than the bent portion 32, so that the first corner 226a can be disposed closer to the bent portion 32. Specifically, in Fig. 9, the first corner 226a and the first corner 226c are disposed at the same position, a hatched portion of the first corner 226c interferes with the bent portion 32, and the first corner 226a does not interfere with the bent portion 32. That is, in the first corner 226c, the interference of the first corner 226c with the bent portion 32 is not eliminated unless the first corner 226c is separated from the bent portion 32 as compared with the state in Fig. 9.

### [3. Description of effects]

As described above, according to the embodiment, the energy storage apparatus 1 includes the energy storage device 20 and the connection member 30 electrically connected to electrode terminal 221 of the energy storage device 20. The connection member 30 includes the opposing portion 31 opposed to the electrode terminal 221 and the bent portion 32 bent from the opposing portion 31 toward the energy storage device 20. The electrode terminal 221 includes the outer peripheral surface 224 and the surface portion 225 opposed to the opposing portion 31 of the connection member 30. The entire first corner 226a formed by the outer peripheral surface 224 and the surface portion 225 facing the bent portion 32 is located inside the intersection point where the virtual extension surface L1 of the surface portion 225 and the virtual extension surface L2 of the outer peripheral surface 224 intersect with each other.

Because the bent portion 32 of the connection member 30 is bent from the opposing portion 31 toward the energy storage device 20, the bent portion 32 does not protrude from the opposing portion 31 on the opposite side to the energy storage device 20. Consequently, an amount of the connection member 30 protruding outward from the energy storage device 20 is prevented, so that a height of the energy storage device 20 can be suppressed as a whole.

The entire first corner 226a on the side of the bent portion 32 in the electrode terminal 221 is located inside the intersection point where the virtual extension surface L1 of the surface portion 225 and the virtual extension surface L2 of the outer peripheral surface 224 intersect with each other, so that the first corner 226a can be prevented from interfering with the bent portion 32 of the connection member 30. Consequently, the electrode terminal 221 of the energy storage device 20 can be brought closer to the bent portion 32 of the connection member 30, and the energy storage device 20 and the connection member 30 can more compactly be disposed. Thus, the energy storage apparatus 1 can be downsized.

The energy storage apparatus 1 includes the plurality of energy storage devices 20 arranged side by side in the first direction (Y-axis direction). The connection member 30 includes the plurality of opposing portions 31 that face the electrode terminals 221 of at least two energy storage devices 20. The bent portion 32 is located between the plurality of opposing portions 31, and the first corner 226a is along the second direction (X-axis direction) orthogonal to the first direction among the electrode terminals 221.

Because the first corner 226a on the side of the bent portion 32 is formed along the second direction, the first corner 226a does not protrude in the first direction. Consequently, the energy storage device 20 can be disposed close to the bent portion 32 in the first direction. That is, the compact disposition can be achieved as compared with the two energy storage devices 20 connected to the connection member side by side in the first direction.

The energy storage apparatus 1 includes the insulating member (the beam 44 of the holding member 40) disposed between the bent portion 32 and the energy storage device 20. The bent portion 32 is opposed to the terminal arrangement surface 223 on which the electrode terminal 221 is disposed in the energy storage device 20. The insulating member is disposed between the bent portion 32 and the terminal arrangement surface 223.

The insulating member is disposed between the bent portion 32 and the energy storage device 20, so that the insulating member can insulate the bent portion 32 and the energy storage device 20 from each other even if the bent portion 32 is brought closer to the energy storage device 20. The bent portion 32 of the connection member 30 and the insulating member are disposed so as to overlap the terminal arrangement surface 223 of the energy storage device 20, so that the interval between the two energy storage devices 20 connected to each other by the connection member 30 can be narrowed. Thus, the two energy storage devices 20, the insulating member, and the connection member 30 can more compactly be disposed.

The first corner 226a has the curved shape with the curvature radius smaller than that of the bent portion 32.

Because the first corner 226a has the curved shape with the curvature radius smaller than that of the bent portion 32, the first corner 226a is curved steeper than the bent portion 32. Consequently, the first corner 226a can be disposed closer to the bent portion 32.

The electrode terminal 221 includes the second corner 226b formed by the outer peripheral surface 224 and the surface portion 225 at the position that is not opposed to the bent portion 32. The first corner 226a and the second corner 226b have the curved shapes. The first corner 226a has the curvature radius larger than that of the second corner 226b.

In the electrode terminal 221, sometimes the deburring is performed during the manufacturing, and the corner is curved. Since the corner is formed by deburring, the curvature radius is small. For this reason, in the portion corresponding to the first corner 226a, the processing is further performed to increase the curvature radius. In the portions that are not processed, the portion that is not opposed to the bent portion 32 constitutes the second corner 226b. That is, the first corner 226a has the curvature radius larger than that of the second corner 226b formed by the deburring, so that the first corner 226a can be disposed closer to the bent portion 32.

### [Others]

Although the energy storage apparatus according to the embodiment of the present invention is described above, the present invention is not limited to the embodiment. That is, it should be understood that the embodiment disclosed herein is illustrative in all points and not restrictive. The scope of the present invention is illustrated by not the above description, but the scope of the claims, and is intended to include all changes within the scope of the claims and meaning equivalent to the scope of the claims.

In the above embodiment, by way of example, the connection member 30 connects the electrode terminals 221 of the two energy storage devices 20. Alternatively, the electrode terminals of at least three energy storage devices may be connected by one connection member. In this case, a plurality of bent portions can be provided in one connection member. When the connection member including the plurality of bent portions is used, the corner directly opposed to each bent portion constitutes the first corner. Even in this case, the entire first corner directly opposed to each bent portion may be located inside the intersection point where the virtual extension surface of the surface portion and the virtual extension surface of the outer peripheral surface intersect with each other. Consequently, even if the connection member including the plurality of bent portions is used, the energy storage device and the connection member can more compactly be disposed.

In the embodiment, the corner 226 formed by the outer peripheral surface 224 of the electrode terminal 221 and the surface portion 225 has the curved shape that protrudes outward over the entire circumference of the electrode terminal 221. Alternatively, in the electrode terminal, only the first corner directly opposed to the bent portion may be the curved shape. The first corner may have any shape as long as the entire first corner is located inside the intersection point where the virtual extension surface of the surface portion and the virtual extension surface of the outer peripheral surface intersect with each other. A C-surface shape and a curved concave surface shape can be cited as other shapes of the first corner. As described above, when the connection member 30 and the electrode terminal 221 are joined by welding, desirably a heat capacity of the electrode terminal 221 is secured as much as possible. For this reason, as in the embodiment, when the first corner 226a of the electrode terminal 221 has the curved shape that protrudes outward, a volume of the electrode terminal 221 can be enlarged as much as possible. Resultantly, the heat capacity of the electrode terminal 221 can be ensured.

In the above embodiment, by way of example, the connection member 30 and the electrode terminal 221 are joined by the welding. Alternatively, the connection member 30 and the electrode terminal 221 may be joined by other joining methods. For example, fastening such as screwing can be cites as other joining methods.

In the above embodiment, by way of example, the electrode terminal 221 has the substantially rectangular shape in planar view. Alternatively, the electrode terminal may have any shape as long as the entire corner near the bent portion in the electrode terminal is located inside of the intersection point where the virtual extension surface of the surface portion and the virtual extension surface of the outer peripheral surface intersect with each other. Other shapes of the electrode terminals include a columnar shape.

In the electrode assembly accommodated in the case 21 of the energy storage device 20, an insulating separator is disposed between the belt-shaped positive electrode plate and negative electrode plate, so that a positive electrode plate and a negative electrode plate are electrically insulated. The electrode assembly may be a winding type in which the separator is disposed on the negative electrode plate, the positive electrode plate is disposed on the separator, and the separator is further disposed on the positive electrode plate to form a cylindrical shape. The winding type may be what is called a "vertical winding system" in which a winding axis is accommodated in the case 21 in a posture along the longitudinal direction (X-direction) of the case 21 or what is a called a "horizontal winding system" in which the winding axis is accommodated in the case 21 in a posture along a height direction (Z-direction) of the case 21. The electrode assembly is not limited to the winding type, but may be a laminated type in which pluralities of positive electrode plates, negative electrode plates, and separators formed in a substantially square sheet shape are laminated in the short direction (Y-direction) of the case 21.

The outer case that accommodates the electrode assembly is not limited to the metal rectangular case made of aluminum or stainless steel, as described in the embodiment. The outer case may be a pouch type in which the electrode assembly is packaged with a film-shaped material. The outer case may be a metal outer packaging case, and the shape may be a columnar, cylindrical shape. The columnar electrode terminal described above may be used in the cylindrical shape. Even in this case, the present invention can be adopted to suppress the height of the entire energy storage device.

A form constructed by any combination of the embodiment and the modification is also included in the scope of the present invention.

### INDUSTRIAL APPLICABILITY

The present invention can be applied to the energy storage apparatus including the energy storage device such as a lithium ion secondary battery.

### DESCRIPTION OF REFERENCE SIGNS

- 1:: energy storage apparatus
- 10:: outer case
- 11:: lid
- 12:: outer case body
- 13, 14:: external terminal
- 20:: energy storage device
- 21:: case
- 22:: terminal
- 29:: circular portion
- 30:: connection member
- 31:: opposing portion
- 32:: bent portion
- 40:: holding member
- 41:: opening
- 41a:: connection member opening
- 41b:: bus bar opening
- 43a, 43b:: surrounding wall
- 44:: beam (insulating member)
- 46:: positioning portion
- 50:: substrate
- 221:: electrode terminal
- 222:: insulating portion
- 223:: terminal arrangement surface
- 224:: outer peripheral surface
- 225:: surface portion
- 226:: corner
- 226a:: first corner
- 226b:: second corner
- 226c:: first corner
- 311:: through-hole
- 431:: first wall surface
- 432:: second wall surface
- 433:: third wall surface
- 461:: abutment portion
- 462:: inclined portion
- L1, L2:: virtual extension surface
- L3:: virtual line
- r1, r2, r3, R1, R2:: curvature radius

## Claims

1. An energy storage apparatus comprising:
an energy storage device; and
a connection member electrically connected to an electrode terminal of the energy storage device,
wherein the connection member includes an opposing portion opposed to the electrode terminal and a bent portion bent from the opposing portion toward the energy storage device,
the electrode terminal includes an outer peripheral surface and a surface portion opposed to the opposing portion of the connection member, and
a first corner facing the bent portion and formed by the outer peripheral surface and the surface portion is entirely located inside an intersection point where a virtual extension surface of the surface portion and a virtual extension surface of the outer peripheral surface intersect with each other.

2. The energy storage apparatus according to claim 1, further comprising a plurality of the energy storage devices arranged side by side in a first direction,
wherein the connection member includes a plurality of the opposing portions opposed to the electrode terminals of at least two energy storage devices,
the bent portion is located between the plurality of opposing portions, and
the first corner is along a second direction orthogonal to the first direction among the electrode terminals.

3. The energy storage apparatus according to claim 1 or 2, further comprising an insulating member disposed between the bent portion and the energy storage device,
wherein the bent portion is opposed to a terminal arrangement surface on which the electrode terminal is disposed in the energy storage device, and
the insulating member is disposed between the bent portion and the terminal arrangement surface.

4. The energy storage apparatus according to any one of claims 1 to 3, wherein the first corner has a curved shape with a curvature radius smaller than that of the bent portion.

5. The energy storage apparatus according to any one of claims 1 to 4, wherein
the electrode terminal includes a second corner formed by the outer peripheral surface and the surface portion at a position that is not opposed to the bent portion,
the first corner and the second corner have curved shapes, and the first corner has a curvature radius larger than that of the second corner.
